# EUROPEAN PATENT SPECIFICATION

(11) **EP 4 417 361 B1**
(45) Date of publication and mention of the grant of the patent: **05.11.2025**
(21) Application number: 24158436.6
(22) Date of filing: 19.02.2024
(51) Int. Cl.: B23Q 39/04

(54) **APPARATUS AND METHOD FOR MANUFACTURING LOCK CYLINDERS**
VORRICHTUNG UND VERFAHREN ZUM HERSTELLEN VON SCHLIESSZYLINDERN
DISPOSITIF ET PROCEDE DE FABRICATION DE CYLINDRES DE SERRURES

(30) Priority: 20.02.2023 IT 202300002865
(43) Date of publication of application: 21.08.2024
(73) Proprietor: Buffoli Transfer S.p.a., 25128 Brescia (IT)
(72) Inventor: BUFFOLI, Edoardo, Brescia BS (IT)
(74) Representative: Manfrin, Marta

(56) References cited:
- CN-A- 113 579 754
- DE-A1- 102014 106 915
- DE-A1- 19 529 071
- US-A- 3 895 424

## Description

### TECHNICAL SECTOR

The present invention relates to an apparatus for machining lock cylinders. Moreover, the present invention describes a method for machining lock cylinders.

### PRIOR ART

Machines for machining products or semi-finished products which require precise machining are known. Said machines are configured such that they comprise a gripping element, which keeps the workpiece stationary, and one or more tools which may carry out on the workpiece a series of machining operations, such as machining with stock removal.

According to the prior art it is known to obtain lock cylinders which have precise tolerances. However the machines according to the prior art also have a number of limitations and drawbacks.

One drawback of these machines consists in the fact that the machinable surfaces of the cylinders are exclusively those which are exposed to the tools, it being therefore difficult to machine the surfaces which are not available to the tools.

In particular, the surfaces gripped by the gripping elements cannot reached by the tools and may be machined only subsequently. Namely, the workpieces must be removed from the machine and then mounted again on the same machine or on another machine which is equipped to perform the subsequent machining steps.

These operations may require time, therefore reducing the productivity of the machine, and are difficult to automate.

Patent Document DE 10 2014 106915 A1 discloses an apparatus on which the preamble of claim 1 is based. Patent Document CN 113 579 754 A discloses an apparatus on which the preamble of claim 10 is based.

### SUMMARY OF THE INVENTION

The problem underlying the present invention is therefore that of providing an apparatus for machining lock cylinders able to overcome the drawbacks of the known machines.

In the context of this task, one object of the invention is to provide an apparatus able to perform more efficiently the machining of lock cylinders. Yet another object of the present invention is that of providing an apparatus which is highly automated.

This task, as well as these and other objects which will appear more clearly below, are achieved by an apparatus and a method for machining lock cylinders according to the attached independent claims.

In particular, according to the present invention, an apparatus for machining lock cylinders comprising a first operating group and a second operating group is provided. The first operating group comprises first stations which comprise at least one machining station and a repositioning station. The second operating group comprises at least one gripping station configured to grip and release a workpiece.

The at least one gripping station is configured to support a workpiece alternately in a first machining configuration, for performing at least one first machining operation thereon, and in a second machining configuration, for performing at least one second machining operation thereon. Moreover, the second configuration is different from the first machining configuration so as to expose to the at least one machining station different parts of the workpiece following a repositioning of the workpiece between the first configuration and the second configuration.

In particular, the repositioning station is configured to reposition the workpiece between the first machining configuration and the second machining configuration.

In the context of the present disclosure "first or second machining operation" is understood as meaning any machining operation carried out on the workpiece in the first machining configuration or second machining configuration, respectively. In other words, "first or second machining operation" is not understood as meaning a specific machining operation, but any machining operation which is carried out in the respective machining configuration. Therefore, the first or second machining operation may be understood as meaning any machining operations which are the same or different from each other.

Furthermore, the repositioning station comprises a first repositioning body and a second repositioning body. **In** particular, the first repositioning body is configured to perform, in sequence, the following:
- remove the workpiece from the gripping station, which releases it;
- move the workpiece so as to make it available for gripping by the second repositioning body.

Moreover, the second repositioning body is configured to perform, in sequence, the following:
- grip the workpiece supported by the first repositioning body, which releases it;
- transfer the workpiece into a position in which the workpiece is available for gripping by the gripping station.

Namely, the apparatus allows machining of a workpiece positioned or configured in the first machining configuration and in the second machining configuration, different from the first configuration, owing to the presence of the repositioning station which allows movement of the workpiece between the first machining configuration and the second machining configuration. **In** particular, the repositioning station may pick up the workpiece from the gripping station, by means of the first repositioning body, and reposition the workpiece in the gripping station in the second machining configuration, by means of the second repositioning body.

More specifically, the second repositioning body may grip the workpiece from the first repositioning body, after the first repositioning body has picked up the workpiece from the gripping station in the first machining configuration. Thereafter, the second repositioning body may grip the workpiece from the first repositioning body and reposition the workpiece in the gripping station in the second machining configuration. **In** particular, preferably the first repositioning body is configured to move the workpiece so as to switch it from the first machining configuration into the second machining configuration.

Namely, the gripping station may grip or support a workpiece in a first machining configuration, so as to allow a first machining operation, performed for example by the at least one machining station, and the gripping station may also grip or support the workpiece in a second machining configuration, so as to allow a second machining operation, performed for example by the at least one machining station. This is possible following the repositioning of the workpiece by the repositioning station, in particular by the first repositioning body and the second repositioning body.

The first repositioning body may in fact pick up the workpiece from the gripping station in the first machining configuration, for example following a first machining operation, and may also rotate the workpiece so as to cause it to assume the second machining configuration. The second repositioning body may then grip the workpiece in the second machining configuration from the first repositioning body and may make it available for gripping by the gripping station, for example so as to allow a second machining operation.

According to the present invention a method for machining lock cylinders by means of the same apparatus is also provided, the method comprising the following steps:
- gripping of the workpiece by the at least one gripping station, so that the workpiece is in the first machining configuration;
- first machining of the workpiece in the first machining configuration by the at least one machining station;
- gripping of the workpiece, by the repositioning station, from the at least one gripping station, which releases it;
- rotation through a working angle of the workpiece by the repositioning station;
- gripping of the workpiece by the at least one gripping station in the second machining configuration, different from the first configuration;
- second machining of the workpiece in the second machining configuration by the at least one machining station.

Furthermore, the repositioning station comprises a first repositioning body and a second repositioning body. In particular, the first repositioning body performs in sequence the following steps:
- removing the workpiece from the gripping station, which releases it;
- moving the workpiece so as to make it available for gripping by the second repositioning body.

Moreover, the second repositioning body performs in sequence the following steps:
- gripping the workpiece supported by the first repositioning body, which releases it;
- transferring the workpiece into a position in which the workpiece is available for gripping by the gripping station.

In other words, the repositioning station comprises a first repositioning body configured at least to grip the workpiece from the gripping station, for example when it is in the first machining configuration, and to move the workpiece, for example from the first machining configuration to the second machining configuration. The repositioning station further comprises a second repositioning body configured to grip the workpiece from the first repositioning body and to make the workpiece available for gripping again by the gripping station, for example in the second machining configuration.

Detailed characteristic features of the apparatus and the method according to the invention are contained in the dependent claims.

Further characteristic features and advantages will emerge more clearly from the description of a preferred, but non-exclusive embodiment of the apparatus and the method according to the invention, with the aid of the drawings provided by way of a non-limiting example in the attached illustrations and listed below.

### BRIEF DESCRIPTION OF THE DRAWINGS

- Figure 1 shows a diagram of an apparatus according to an embodiment of the present invention;
- Figures 2A, 2B, 2C, 2D, 2F, 2E show a sequence for repositioning of a workpiece from the first machining configuration into the second machining configuration, in an embodiment of the apparatus according to the present invention.

### DETAILED DESCRIPTION

With particular reference to the said figures, 100 denotes overall an apparatus for machining lock cylinders, comprising a first operating group and a second operating group. The first operating group comprises first stations which comprise at least one machining station 10 and a repositioning station 20, and the second operating group comprises at least one gripping station 30 configured to grip and release a workpiece.

In particular, the gripping station 30 is configured to support a workpiece alternately in a first machining configuration, for performing at least one first machining operation thereon, and in a second machining configuration, for performing at least one second machining operation thereon, where the second configuration is different from the first machining configuration so as to expose to the at least one machining station 10 different parts of the workpiece, following repositioning of the workpiece between the first configuration and the second configuration.

In particular, the repositioning station 20 is configured to reposition the workpiece between the first machining configuration and the second machining configuration.

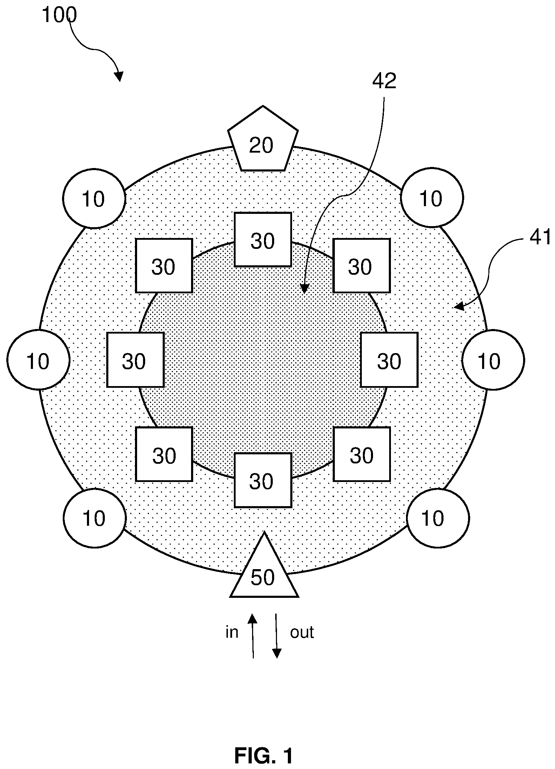

Preferably, the first operating group comprises a first support 41 (indicated schematically in Figure 1), and the at least one machining station 10 and the repositioning station 20 are fixed to the first support 41.

Moreover, preferably the second operating group comprises a second support 42, and the at least one gripping station 30 is fixed to the second support 42 |(indicated schematically in Figure 1).

Even more preferably, the apparatus 100 defines a main operating axis around which the support 42 is rotatable so that the first stations face the at least one gripping station 30. For example, the gripping station 30 may rotate together with the second support 42 so to move the workpiece into the proximity of the at least one machining station 10 and the repositioning station 20, where it may be respectively machined or repositioned.

Alternatively, the apparatus may define a main operating direction along which the first support 41 and/or the second support 42 are movable so that the first stations face the at least one gripping station 30. Namely, the apparatus may be configured also along a linear direction, i.e. operating along a linear or straight direction along which the first stations and/or the at least one gripping station are arranged.

Below a rotatable configuration of the apparatus, i.e. a configuration rotatable about a main operating axis as described above, will be regarded as preferred. However, a linear configuration is to be regarded as an alternative embodiment which is effective for resolving the technical problem defined above and therefore it also forms the subject of the present invention.

Preferably, the at least one gripping station comprises a first seat and a second seat, where the first seat is configured to support the workpiece in the first machining configuration, while the second seat is configured to support the workpiece in the second machining configuration.

Preferably, the second operating group comprises the second support 42 and the gripping station 30 is supported by the second support 42 rotatably around a spindle axis. In particular, a workpiece gripped by the gripping station is rotatable around the spindle axis so as to expose different portions of the workpiece to the at least one machining station 10, following a rotation of the gripping station 30.

In other words, a workpiece gripped by the gripping station 30 may be rotated by the latter around the spindle axis, for example during the first or second machining operations, so as to allow the at least one machining station to machine one or more given portions of the surface of the workpiece. The workpiece may rotated around the spindle axis also so as to favour gripping by the repositioning station 20.

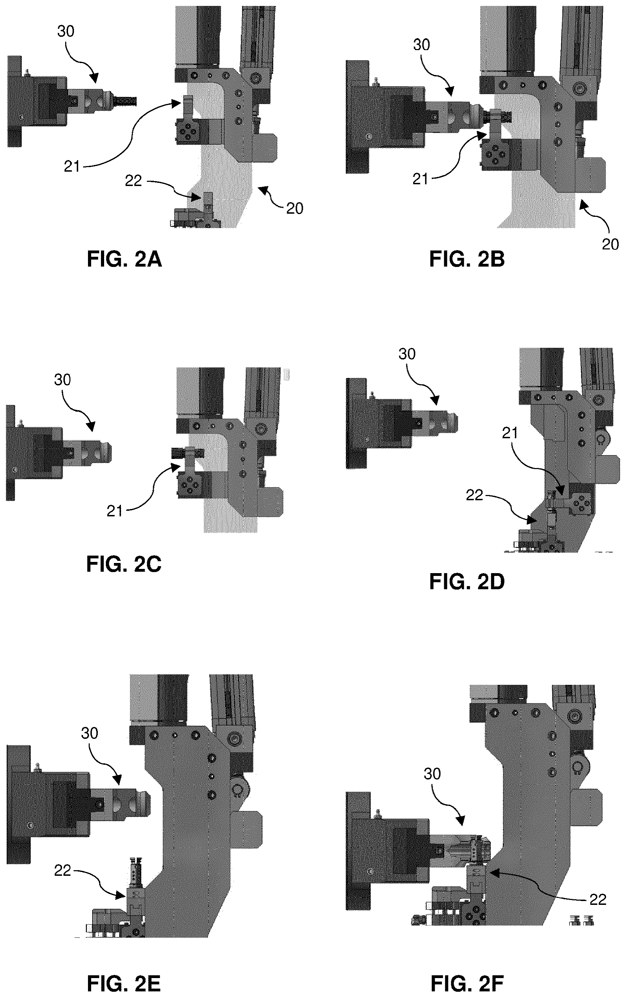

According to the invention, the repositioning station 20 comprises a first repositioning body 21 and a second repositioning body 22. In particular, as can be seen in Figures 2A to 2E, the first repositioning body 21 is configured to perform, in sequence, the following:
- remove the workpiece from the gripping station, which releases it;
- move the workpiece so as to make it available for gripping by the second repositioning body 32.

Moreover, the second repositioning body 22 is configured to perform, in sequence, the following:
- grip the workpiece supported by the first repositioning body 21, which releases it;
- transfer the workpiece into a position in which the workpiece is available for gripping by the gripping station 30.

In other words, the first repositioning body 21 is configured to remove the workpiece from the gripping station 30, preferably from the first seat of the gripping station 30, and then to move it, making it available for gripping by the second repositioning body 22. The latter is configured to grip the workpiece from the first repositioning body 21 and to transfer it to the gripping station 30, preferably into the second seat of the gripping station 30.

Namely, the second repositioning body 22 may move the workpiece into the proximity of the second gripping station 30 which may then grip it from the second repositioning body 22, which releases it.

Preferably, the first repositioning body is configured to grip the workpiece in the first machining configuration, for example following a first machining operation, and preferably to move it, for example rotate it through a working angle, from the first machining configuration into the second machining configuration.

Preferably, therefore, the second repositioning body is configured to grip the workpiece in the second machining configuration and to make it available for gripping by the gripping station, so as to allow for example a second machining operation on the workpiece once it has been gripped by the gripping station.

Preferably, the first repositioning body 21 is configured to rotate through a working angle, preferably 90°, the workpiece gripped during its movement.

Preferably, the at least one machining station 10 is configured to perform the at least one first machining operation which comprises the formation of a reference surface on the workpiece.

In particular, the gripping station 30 has a reference abutment designed to interfere with the reference surface of the workpiece so as to define a precise relative position of the workpiece with respect to the gripping station 30.

Moreover, preferably the repositioning station 20 can be operated so as to transfer the workpiece, provided with a reference surface, into the gripping station 30 so that the reference surface interferes with the reference abutment.

Preferably, the at least one machining station 10 comprises at least one interchangeable tool. Namely, the at least one machining station 10 may comprise more than one tool for performing machining operations and the tools may perform a plurality of machining operations on the workpiece.

Preferably, the first stations of the first operating group comprise a plurality of machining stations 10 and a repositioning station 20, and moreover the second operating group comprises a plurality of gripping stations 30.

Preferably, the first stations are organized so as to each face forwards, namely opposite one of the gripping stations 30. **In** this way each of the machining stations 10 may perform one or more machining operations on the workpiece gripped by one of the gripping stations 30, and then the gripping station 30 may move towards the following machining station 10. Moreover, the gripping station 30 may move towards the repositioning station 20 which may reposition the workpiece from the first machining configuration into the second machining configuration.

Preferably the plurality of gripping stations 30 are arranged in a circular arrangement and the plurality of machining stations 10 are arranged in a circular arrangement around said gripping stations. Moreover, preferably the repositioning station 20 is interposed between two adjacent machining stations 10.

Preferably, one of the second operating group and the first operating group is configured to be able to move relative to the other one so as to expose each of the plurality of gripping stations 30 to each of the plurality of machining stations 10 and to the repositioning station 20. **In** this particularly advantageous embodiment, each of the plurality of machining stations 10 performs either the first machining operation or the second machining operation following a movement of the second operating group or the first operating group, while the repositioning station 20 performs gripping and rotation through a working angle following a movement of the second operating group or the first operating group.

Preferably, the first stations further comprise a loading station and an unloading station or a loading/unloading station 50.

The present disclosure also relates to a method for machining lock cylinders by means of an apparatus 100 according to one of the embodiments described above. In particular, the apparatus comprises a first operating group, comprising at least one machining station 10 and a repositioning station 20, and a second operating group comprising at least one gripping station 30.

In particular, the method comprises the following steps:
- gripping of a workpiece by the at least one gripping station 30, in such a way that the workpiece is in a first machining configuration;
- machining of the workpiece by means of a first machining operation performed in the first machining configuration by the at least one machining station 10;
- gripping of the workpiece, by the repositioning station 20, from the at least one gripping station 30, which releases it;
- rotation, through a working angle, of the workpiece by the repositioning station 20;
- gripping of the workpiece by the at least one gripping station 30 in a second machining configuration different from the first configuration;
- further machining of the workpiece by means of a second machining operation in the second machining configuration by the at least one machining station 10;

Preferably, the first operating group comprises a plurality of machining stations 10 and a repositioning station 20, each fixed to a first support 41, and the second operating group comprises a plurality of gripping stations 20, each fixed to a second support 42.

Preferably, the second support 42 is configured to be able to move relative to the first support 41 in such a way as to expose each of the gripping stations 20 to each of the machining stations 10 and to the repositioning station 20.

In particular, each of the machining stations 10 may perform the first machining operation or the second machining operation following a movement of the second support 42 with respect to the first support 41, and the repositioning station 20 may perform the gripping and the rotation, through a working angle, of the workpiece following a movement of the second support 42.

Namely, for example, the second support 42 may rotate around a main operating axis of the apparatus 100 in such a way that each of the gripping stations 30 faces in sequence each of the machining stations 10 and the repositioning station 20, which are fixed to the fixed support 41 which is preferably stationary or configured to remain stationary.

In other words, in order to obtain an apparatus which is particularly compact and has a high productivity, it is possible to organize the apparatus 100 in a rotating configuration, in which either one of the first support or the second support 42 is rotatable around the main operating axis of the apparatus so that the first stations face the gripping stations 30.

Preferably, therefore, each gripping station 30 is moved so that a workpiece faces a first portion of the machining stations 10 in order to perform the first machining operations, then it is moved so that a workpiece faces the repositioning station, which moves the workpiece between the first and second machining configurations, and finally each gripping station 30 is moved so that the workpiece faces a second portion of the machining stations 10 for performing the second machining operations.

Even more preferably, the workpiece may be initially made available to a gripping station 30, which grips it, by means of a loading station and the same workpiece may be removed from the gripping station at the end of the machining operations by means of an unloading station. Alternatively, both the aforementioned operations may be performed by a single loading and unloading station.

According to the invention, the repositioning station 20 comprises a first repositioning body 21 and a second repositioning body 22. **In** particular, the first repositioning body 21 performs in sequence the following steps:
- removing the workpiece from the gripping station 30, which releases it, for example when the workpiece is in the first machining configuration following a first machining operation;
- moving the workpiece so as to make it available for gripping by the second repositioning body 32.

For example, the first repositioning body 21 may rotate the workpiece from the first machining configuration into the second machining configuration.

Moreover, the second repositioning body 22 performs in sequence the following steps:
- gripping the workpiece supported by the first repositioning body 21, which releases it;
- transferring the workpiece into a position in which the workpiece is available for gripping by the gripping station 30.

For example, therefore the second repositioning body 22 may make available the workpiece in the second machining configuration for gripping by the gripping station 30, for example so as to allow a second machining operation.

Consequently, it is therefore possible to perform in a rapid and automated manner a first machining operation and a second machining operation on the workpiece owing to the repositioning station 20. For example, the second machining operation may machine the workpiece in one or more non-accessible zones of the workpiece when it is in the first machining configuration, or vice versa, owing to gripping by the gripping station 30.

Preferably, the first machining operation comprises the formation of a reference surface on the workpiece. Moreover, preferably the gripping station 30 has a reference abutment which interferes with the reference surface of a workpiece so as to define a precise relative position of the workpiece with respect to the gripping station 30. Moreover, preferably the repositioning station 20 is operated so as to transfer a workpiece, provided with the reference surface, into the gripping station 30 and in this position the reference surface interferes with or abuts against the reference abutment.

As a result, it is possible to maintain very precise automated machining of the workpiece, since the reference abutment ensures that the workpiece is situated at precise and predefined coordinates during machining thereof.

It can therefore be understood how an apparatus and a method according to the present invention are able to achieve the predefined task and objects.

In particular, the apparatus and the method according to the present invention, described in their preferred embodiments, allow more efficient and productive machining of lock cylinders than that taught by the prior art. Moreover, the apparatus and the method described may be easily automated.

The invention thus devised may be subject to numerous modifications and variations, all of which fall within the scope of protection of the attached **claims.**

Where the operational characteristics and the techniques mentioned in the following claims are followed by reference numbers or symbols, these reference numbers or symbols have been assigned with the sole purpose of facilitating understanding of the description and said claims and consequently they do not limit in any way the interpretation of each element which is identified, purely by way of example, by said reference numbers or symbols.

## Claims

1. Apparatus (100) for machining lock cylinders comprising:
- a first operating group comprising first stations which comprise at least one machining station (10) and a repositioning station (20), each fixed to a first support (41),
- a second operating group comprising at least one gripping station (30) configured to grip and release a workpiece,
wherein said at least one gripping station (30) is configured to support alternately a workpiece in a first machining configuration, for performing at least one first machining operation thereon, and in a second machining configuration, for performing at least one second machining operation thereon, wherein said second configuration is different from said first machining configuration so as to expose to said at least one machining station (10) different parts of the workpiece following a repositioning of the workpiece between said first configuration and said second configuration;
wherein said repositioning station (20) is configured to reposition said workpiece between said first machining configuration and said second machining configuration,
said apparatus (100) being **characterised in that** said repositioning station (20) comprises:
- a first repositioning body (21) and
- a second repositioning body (22),
wherein said first repositioning body (21) is configured to perform, in sequence, the following:
- remove said workpiece from said gripping station (30), which releases it,
- move said workpiece so as to make it available for gripping by said second repositioning body (22);
and wherein said second repositioning body (22) is configured to perform, in sequence, the following:
- grip said workpiece supported by said first repositioning body (21), which releases it;
- transfer said workpiece into a position in which the workpiece is available for gripping by said gripping station (30).

2. Apparatus according to claim 1 where said second operating group comprises a second support (42), wherein said gripping station (30) is supported by said second support (42) in a rotatable manner around a spindle axis so that a workpiece gripped by said gripping station (30) is rotatable around said spindle axis so as to expose different portions of said workpiece to said at least one machining station (10) following a rotation of said gripping station (30).

3. Apparatus (100) according to any one of the preceding claims, wherein said first repositioning body (21) is configured to rotate a workpiece gripped by it through a working angle, preferably 90°.

4. Apparatus (100) according to any one of the preceding claims, wherein said at least one machining station (10) is configured to perform said at least one first machining operation which comprises the formation of a reference surface on the workpiece;
where said gripping station (30) has a reference abutment able to interfere with the reference surface of a workpiece so as to define a precise relative position of the workpiece with respect to the gripping station (30);
where said repositioning station (20) can be operated so as to transfer a workpiece, provided with a reference surface, into said gripping station (30) so that the reference surface interferes with said reference abutment.

5. Apparatus (100) according to any one of the preceding claims, wherein said at least one machining station (10) comprises at least one interchangeable tool.

6. Apparatus (100) according to any one of the preceding claims, wherein said first stations comprise a plurality of machining stations (10) and a repositioning station (20), and wherein said second operating group comprises a plurality of gripping stations (30).

7. Apparatus (100) according to the preceding claim, wherein the plurality of gripping stations (30) is arranged in a circular arrangement and the plurality of machining stations (10) is arranged in a circular arrangement around said gripping stations, and wherein said repositioning station (20) is interposed between two adjacent machining stations (10).

8. Apparatus (100) according to claim 6 or 7, wherein one of said second operating group and said first operating group is configured to be able to move relative to the other one in such a way as to expose each of said plurality of gripping stations (30) to each of said plurality of machining stations (10) and to said repositioning station (20), in such a way that each of said plurality of machining stations (10) carries out said first machining operation or said second machining operation following a movement of said second operating group or said first operating group, and in such a way that said repositioning station (20) carries out said gripping and said rotation through a working angle following a movement of said second operating group or said first operating group.

9. Apparatus (100) according to any one of the preceding claims, wherein said first stations further comprise a loading station and an unloading station or a loading/unloading station (50).

10. Method for machining lock cylinders, wherein the method comprises:
- gripping a workpiece by at least one gripping station (30), in such a way that said workpiece is in a first machining configuration;
- machining the workpiece by means of a first machining operation performed in the first machining configuration by a machining station (10);
said method being **characterised by**
- gripping of the workpiece, by a repositioning station (20), from said at least one gripping station (30), which releases it;
- rotation of said workpiece through a working angle by said repositioning station (20);
- gripping of said workpiece by said at least one gripping station (30) in a second machining configuration, different from the first configuration;
- further machining of the workpiece by means of a second machining operation performed in the second machining configuration by said at least one machining station (10);
and wherein the repositioning station (20) comprises:
- a first repositioning body (21) and
- a second repositioning body (22),
wherein said first repositioning body (21) performs in sequence the following steps:
- removing said workpiece from said gripping station (30), which releases it;
- moving said workpiece so as to make it available for gripping by said second repositioning body (22);
and wherein said second repositioning body (22) performs in sequence the following steps:
- gripping said workpiece supported by said first repositioning body (21), which releases it;
- transferring said workpiece into a position in which the workpiece is available for gripping by said gripping station (30).

11. Method according to the preceding claim, wherein said first operating group comprises a plurality of machining stations (10) and a repositioning station (20), each fixed to a first support (41), and said second operating group comprises a plurality of gripping stations (20), each fixed to a first support (41), wherein one of said second operating group and said first operating group is configured to be able to move relative to the other group in such a way as to expose each of said plurality of gripping stations (20) to each of said plurality of machining stations (10) and to said repositioning station (20),
and wherein each of said plurality of machining stations (10) carries out said first machining operation or said second machining operation following a movement of said second operating group or said first operating group, and wherein said repositioning station (20) carries out said gripping and said rotation through a working angle following a movement of said second operating group or said first operating group.

12. Method according to either one of claims 10 or 11, wherein the first machining operation comprises the formation of a reference surface on the workpiece;
where said gripping station (30) has a reference abutment which interferes with the reference surface of a workpiece so as to define a precise relative position of the workpiece with respect to the gripping station (30);
wherein said repositioning station (20) is operated to transfer a workpiece, provided with the reference surface, into said gripping station (30) and in said position the reference surface interferes with or abuts against said reference abutment.

## Patentansprüche

1. Einrichtung (100) zum Bearbeiten von Schließzylindern, umfassend:
- eine erste Betriebsgruppe, umfassend erste Stationen, die mindestens eine Bearbeitungsstation (10) und eine Neupositionierungsstation (20) umfassen, die jeweils an einem ersten Träger (41) befestigt sind,
- eine zweite Betriebsgruppe, umfassend mindestens eine Greifstation (30), die konfiguriert ist, um ein Werkstück zu greifen und loszulassen,
wobei die mindestens eine Greifstation (30) konfiguriert ist, um ein Werkstück in einer ersten Bearbeitungskonfiguration zum Durchführen mindestens eines ersten Bearbeitungsbetriebs und in einer zweiten Bearbeitungskonfiguration zum Durchführen mindestens eines zweiten Bearbeitungsbetriebs abwechselnd zu tragen, wobei sich die zweite Konfiguration von der ersten Bearbeitungskonfiguration unterscheidet, um der mindestens einen Bearbeitungsstation (10) nach einem Neupositionieren des Werkstücks zwischen der ersten Konfiguration und der zweiten Konfiguration unterschiedliche Teile des Werkstücks auszusetzen;
wobei die Neupositionierungsstation (20) konfiguriert ist, um das Werkstück zwischen der ersten Bearbeitungskonfiguration und der zweiten Bearbeitungskonfiguration neu zu positionieren,
wobei die Einrichtung (100) **dadurch gekennzeichnet ist, dass** die Neupositionierungsstation (20) umfasst:
- einen ersten Neupositionierungskörper (21) und
- einen zweiten Neupositionierungskörper (22),
wobei der erste Neupositionierungskörper (21) konfiguriert ist, um nacheinander das Folgende durchzuführen:
- Entnehmen des Werkstücks aus der Greifstation (30), die es freigibt,
- Bewegen des Werkstücks, um es zum Greifen durch den zweiten Neupositionierungskörper (22) verfügbar zu machen;
und wobei der zweite Neupositionierungskörper (22) konfiguriert ist, um nacheinander das Folgende durchzuführen:
- Greifen des Werkstücks, das durch den ersten Neupositionierungskörper (21) getragen wird, der es freigibt;
- Überführen des Werkstücks in eine Position, in der das Werkstück zum Greifen durch die Greifstation (30) bereit ist.

2. Einrichtung nach Anspruch 1, wobei die zweite Betriebsgruppe einen zweiten Träger (42) umfasst, wobei die Greifstation (30) durch den zweiten Träger (42) auf eine drehbare Weise um eine Spindelachse herum gelagert ist, so dass ein Werkstück, das durch die Greifstation (30) gegriffen wird, um die Spindelachse herum drehbar ist, um nach einer Drehung der Greifstation (30) unterschiedliche Abschnitte des Werkstücks der mindestens einen Bearbeitungsstation (10) auszusetzen.

3. Einrichtung (100) nach einem der vorstehenden Ansprüche, wobei der erste Neupositionierungskörper (21) konfiguriert ist, um ein Werkstück, das durch ihn über einen Betriebswinkel gegriffen wird, um vorzugsweise 90°, zu drehen.

4. Einrichtung (100) nach einem der vorstehenden Ansprüche, wobei die mindestens eine Bearbeitungsstation (10) konfiguriert ist, um den mindestens einen ersten Bearbeitungsbetrieb durchzuführen, der die Ausbildung einer Referenzoberfläche auf dem Werkstück umfasst;
wobei die Greifstation (30) einen Referenzanschlag aufweist, der mit der Referenzoberfläche eines Werkstücks in Eingriff kommen kann, um eine präzise relative Position des Werkstücks hinsichtlich der Greifstation (30) zu definieren;
wobei die Neupositionierungsstation (20) betrieben werden kann, um ein Werkstück, das mit einer Referenzoberfläche versehen ist, in die Greifstation (30) zu überführen, sodass die Referenzoberfläche mit dem Referenzanschlag in Eingriff kommt.

5. Einrichtung (100) nach einem der vorstehenden Ansprüche, wobei die mindestens eine Bearbeitungsstation (10) mindestens ein austauschbares Werkzeug umfasst.

6. Einrichtung (100) nach einem der vorstehenden Ansprüche, wobei die ersten Stationen eine Vielzahl von Bearbeitungsstationen (10) und eine Neupositionierungsstation (20) umfassen und wobei die zweite Betriebsgruppe eine Vielzahl von Greifstationen (30) umfasst.

7. Einrichtung (100) nach dem vorstehenden Anspruch, wobei die Vielzahl von Greifstationen (30) in einer kreisförmigen Anordnung angeordnet ist und die Vielzahl von Bearbeitungsstationen (10) in einer kreisförmigen Anordnung um die Greifstationen herum angeordnet ist, und wobei die Neupositionierungsstation (20) zwischen zwei angrenzenden Bearbeitungsstationen (10) eingefügt ist.

8. Einrichtung (100) nach Anspruch 6 oder 7, wobei eine von der zweiten Betriebsgruppe und der ersten Betriebsgruppe konfiguriert ist, um sich relativ zu der anderen einen auf eine Weise bewegen zu können, dass jede der Vielzahl von Greifstationen (30) jeder der Vielzahl von Bearbeitungsstationen (10) und der Neupositionierungsstation (20) ausgesetzt ist, auf eine Weise, dass jede der Vielzahl von Bearbeitungsstationen (10) den ersten Bearbeitungsbetrieb oder den zweiten Bearbeitungsbetrieb nach einer Bewegung der zweiten Betriebsgruppe oder der ersten Betriebsgruppe ausführt, und auf eine Weise, dass die Neupositionierungsstation (20) das Greifen und die Drehung über einen Betriebswinkel nach einer Bewegung der zweiten Betriebsgruppe oder der ersten Betriebsgruppe ausführt.

9. Einrichtung (100) nach einem der vorstehenden Ansprüche, wobei die ersten Stationen ferner eine Ladestation und eine Entladestation oder eine Lade- /Entladestation (50) umfassen.

10. Verfahren zum maschinellen Bearbeiten von Schließzylindern, wobei das Verfahren umfasst:
- Greifen eines Werkstücks durch mindestens eine Greifstation (30), auf eine Art dass sich das Werkstück in einer ersten Bearbeitungskonfiguration befindet;
- Bearbeiten des Werkstücks mittels eines ersten Bearbeitungsbetriebs, der in der ersten Bearbeitungskonfiguration durch eine Bearbeitungsstation (10) durchgeführt wird; wobei das Verfahren **gekennzeichnet ist durch**
- Greifen des Werkstücks, **durch** eine Neupositionierungsstation (20), von der mindestens einen Greifstation (30), die es freigibt;
- Drehung des Werkstücks um einen Betriebswinkel **durch** die Neupositionierungsstation (20);
- Greifen des Werkstücks **durch** die mindestens eine Greifstation (30) in einer zweiten Bearbeitungskonfiguration, die sich von der ersten Konfiguration unterscheidet;
- weiteres Bearbeiten des Werkstücks mittels eines zweiten Bearbeitungsbetriebs, der in der zweiten Bearbeitungskonfiguration **durch** die mindestens eine Bearbeitungsstation (10) durchgeführt wird;
und wobei die Neupositionierungsstation (20) umfasst:
- einen ersten Neupositionierungskörper (21) und
- einen zweiten Neupositionierungskörper (22),
wobei der erste Neupositionierungskörper (21) nacheinander die folgenden Schritte durchführt:
- Entnehmen des Werkstücks aus der Greifstation (30), die es freigibt;
- Bewegen des Werkstücks, um es zum Greifen **durch** den zweiten Neupositionierungskörper (22) verfügbar zu machen;
und wobei der zweite Neupositionierungskörper (22) nacheinander die folgenden Schritte durchführt:
- Greifen des Werkstücks, das **durch** den ersten Neupositionierungskörper (21) getragen wird, der es freigibt;
- Übertragen des Werkstücks in eine Position, in der das Werkstück zum Greifen **durch** die Greifstation (30) bereit ist.

11. Verfahren nach dem vorstehenden Anspruch, wobei die erste Betriebsgruppe eine Vielzahl von Bearbeitungsstationen (10) und eine Neupositionierungsstation (20) umfasst, die jeweils an einem ersten Träger (41) befestigt sind, und die zweite Betriebsgruppe eine Vielzahl von Greifstationen (20) umfasst, die jeweils an einem ersten Träger (41) befestigt sind, wobei eine der zweiten Betriebsgruppe und der ersten Betriebsgruppe konfiguriert ist, um sich relativ zu der anderen Gruppe auf eine Weise bewegen zu können, dass jede der Vielzahl von Greifstationen (20) jeder der Vielzahl von Bearbeitungsstationen (10) und der Neupositionierungsstation (20) ausgesetzt ist,
und wobei jede der Vielzahl von Bearbeitungsstationen (10) den ersten Bearbeitungsbetrieb oder den zweiten Bearbeitungsbetrieb nach einer Bewegung der zweiten Betriebsgruppe oder der ersten Betriebsgruppe ausführt, und wobei die Neupositionierungsstation (20) das Greifen und die Drehung über einen Betriebswinkel nach einer Bewegung der zweiten Betriebsgruppe oder der ersten Betriebsgruppe ausführt.

12. Verfahren nach einem der Ansprüche 10 oder 11, wobei der erste Bearbeitungsbetrieb die Ausbildung einer Referenzoberfläche auf dem Werkstück umfasst;
wobei die Greifstation (30) einen Referenzanschlag aufweist, der mit der Referenzoberfläche eines Werkstücks in Eingriff kommt, um eine genaue relative Position des Werkstücks hinsichtlich der Greifstation (30) zu definieren;
wobei die Neupositionierungsstation (20) betrieben wird, um ein Werkstück, das mit der Referenzoberfläche versehen ist, in die Greifstation (30) zu überführen, und in der Position die Referenzoberfläche mit dem Referenzanschlag in Eingriff kommt oder an diesem anliegt.

## Revendications

1. Appareil (100) permettant d'usiner des barillets de serrure comprenant :
- un premier groupe d'exécution comprenant des premières stations qui comprennent au moins une station d'usinage (10) et une station de repositionnement (20), chacune fixée à un premier support (41),
- un second groupe d'exécution comprenant au moins une station de préhension (30) conçue pour saisir et relâcher une pièce à usiner,
dans lequel ladite au moins une station de préhension (30) est conçue pour supporter alternativement une pièce à usiner dans une première configuration d'usinage, pour réaliser au moins une première opération d'usinage sur celle-ci, et dans une seconde configuration d'usinage, pour réaliser au moins une seconde opération d'usinage sur celle-ci, dans lequel ladite seconde configuration est différente de ladite première configuration d'usinage de manière à exposer à ladite au moins une station d'usinage (10) différentes parties de la pièce à usiner à la suite d'un repositionnement de la pièce à usiner entre ladite première configuration et ladite seconde configuration ;
dans lequel ladite station de repositionnement (20) est conçue pour repositionner ladite pièce à usiner entre ladite première configuration d'usinage et ladite seconde configuration d'usinage,
ledit appareil (100) étant **caractérisé en ce que** ladite station de repositionnement (20) comprend :
- un premier corps de repositionnement (21) et
- un second corps de repositionnement (22),
dans lequel ledit premier corps de repositionnement (21) est conçu pour réaliser, dans l'ordre, les opérations suivantes consistant à :
- retirer ladite pièce à usiner de ladite station de préhension (30), qui la libère,
- déplacer ladite pièce à usiner de manière à la rendre disponible pour être saisie par ledit second corps de repositionnement (22) ;
et dans lequel ledit second corps de repositionnement (22) est conçu pour réaliser, dans l'ordre, les opérations suivantes consistant à :
- saisir ladite pièce à usiner supportée par ledit premier corps de repositionnement (21), qui la libère ;
- transférer ladite pièce à usiner dans une position dans laquelle la pièce à usiner est disponible pour être saisie par ladite station de préhension (30).

2. Appareil selon la revendication 1, ledit second groupe d'exécution comprenant un second support (42), dans lequel ladite station de préhension (30) est supportée par ledit second support (42) de manière rotative autour d'un axe de broche de sorte qu'une pièce à usiner saisie par ladite station de préhension (30) peut tourner autour dudit axe de broche de manière à exposer différentes parties de ladite pièce à usiner à ladite au moins une station d'usinage (10) à la suite d'une rotation de ladite station de préhension (30).

3. Appareil (100) selon l'une quelconque des revendications précédentes, dans lequel ledit premier corps de repositionnement (21) est conçu pour faire tourner une pièce à usiner saisie par celui-ci selon un angle de travail, de préférence de 90°.

4. Appareil (100) selon l'une quelconque des revendications précédentes, dans lequel ladite au moins une station d'usinage (10) est conçue pour réaliser ladite au moins une première opération d'usinage qui comprend la formation d'une surface de référence sur la pièce à usiner ;
ladite station de préhension (30) ayant une butée de référence pouvant interférer avec la surface de référence d'une pièce à usiner de manière à définir une position relative précise de la pièce à usiner par rapport à la station de préhension (30) ;
ladite station de repositionnement (20) pouvant être actionnée de manière à transférer une pièce à usiner, munie d'une surface de référence, dans ladite station de préhension (30) de sorte que la surface de référence interfère avec ladite butée de référence.

5. Appareil (100) selon l'une quelconque des revendications précédentes, dans lequel ladite au moins une station d'usinage (10) comprend au moins un outil interchangeable.

6. Appareil (100) selon l'une quelconque des revendications précédentes, dans lequel lesdites premières stations comprennent une pluralité de stations d'usinage (10) et une station de repositionnement (20), et dans lequel ledit second groupe d'exécution comprend une pluralité de stations de préhension (30).

7. Appareil (100) selon la revendication précédente, dans lequel la pluralité de stations de préhension (30) est agencée dans un agencement circulaire et la pluralité de stations d'usinage (10) est agencée dans un agencement circulaire autour desdites stations de préhension, et dans lequel ladite station de repositionnement (20) est interposée entre deux stations d'usinage adjacentes (10).

8. Appareil (100) selon la revendication 6 ou 7, dans lequel l'un dudit second groupe d'exécution et dudit premier groupe d'exécution est conçu pour pouvoir se déplacer par rapport à l'autre afin d'exposer chacune de ladite pluralité de stations de préhension (30) à chacune de ladite pluralité de stations d'usinage (10) et à ladite station de repositionnement (20), de telle sorte que chacune de ladite pluralité de stations d'usinage (10) effectue ladite première opération d'usinage ou ladite seconde opération d'usinage à la suite d'un déplacement dudit second groupe d'exécution ou dudit premier groupe d'exécution, et de telle sorte que ladite station de repositionnement (20) effectue ladite préhension et ladite rotation selon un angle de travail à la suite d'un déplacement dudit second groupe d'exécution ou dudit premier groupe d'exécution.

9. Appareil (100) selon l'une quelconque des revendications précédentes, dans lequel lesdites premières stations comprennent en outre une station de chargement et une station de déchargement ou une station de chargement/déchargement (50).

10. Procédé permettant d'usiner des barillets de serrure, dans lequel le procédé comprend :
- la saisie d'une pièce à usiner par au moins une station de préhension (30), de telle sorte que ladite pièce à usiner se trouve dans une première configuration d'usinage ;
- l'usinage de la pièce à usiner au moyen d'une première opération d'usinage réalisée dans la première configuration d'usinage par une station d'usinage (10) ; ledit procédé étant **caractérisé par**
- la saisie de la pièce à usiner, par une station de repositionnement (20), à partir de ladite au moins une station de préhension (30), qui la libère ;
- la rotation de ladite pièce à usiner selon un angle de travail par ladite station de repositionnement (20) ;
- la saisie de ladite pièce à usiner par ladite au moins une station de préhension (30) dans une seconde configuration d'usinage, différente de la première configuration ;
- l'usinage supplémentaire de la pièce à usiner au moyen d'une seconde opération d'usinage réalisée dans la seconde configuration d'usinage par ladite au moins une station d'usinage (10) ;
et dans lequel la station de repositionnement (20) comprend :
- un premier corps de repositionnement (21) et
- un second corps de repositionnement (22),
dans lequel ledit premier corps de repositionnement (21) réalise, dans l'ordre, les étapes suivantes consistant à :
- retirer ladite pièce à usiner de ladite station de préhension (30), qui la libère ;
- déplacer ladite pièce à usiner de manière à la rendre disponible pour être saisie par ledit second corps de repositionnement (22) ;
et dans lequel ledit second corps de repositionnement (22) réalise, dans l'ordre, les étapes suivantes consistant à :
- saisir ladite pièce à usiner supportée par ledit premier corps de repositionnement (21), qui la libère ;
- transférer ladite pièce à usiner dans une position dans laquelle la pièce à usiner est disponible pour être saisie par ladite station de préhension (30).

11. Procédé selon la revendication précédente, dans lequel ledit premier groupe d'exécution comprend une pluralité de stations d'usinage (10) et une station de repositionnement (20), chacune fixée à un premier support (41), et ledit second groupe d'exécution comprend une pluralité de stations de préhension (20), chacune fixée à un premier support (41), dans lequel l'un dudit second groupe d'exécution et dudit premier groupe d'exécution est conçu pour pouvoir se déplacer par rapport à l'autre groupe afin d'exposer chacune de ladite pluralité de stations de préhension (20) à chacune de ladite pluralité de stations d'usinage (10) et à ladite station de repositionnement (20),
et dans lequel chacun de ladite pluralité de stations d'usinage (10) effectue ladite première opération d'usinage ou ladite seconde opération d'usinage à la suite d'un déplacement dudit second groupe d'exécution ou dudit premier groupe d'exécution, et dans lequel ladite station de repositionnement (20) effectue ladite saisie et ladite rotation selon un angle de travail à la suite d'un déplacement dudit second groupe d'exécution ou dudit premier groupe d'exécution.

12. Procédé selon l'une des revendications 10 ou 11, dans lequel la première opération d'usinage comprend la formation d'une surface de référence sur la pièce à usiner ;
ladite station de préhension (30) ayant une butée de référence qui interfère avec la surface de référence d'une pièce à usiner de manière à définir une position relative précise de la pièce à usiner par rapport à la station de préhension (30) ;
dans lequel ladite station de repositionnement (20) est actionnée pour transférer une pièce à usiner, munie de la surface de référence, dans ladite station de préhension (30) et, dans ladite position, la surface de référence interfère avec ou vient en butée contre ladite butée de référence.
